# EUROPEAN PATENT SPECIFICATION

(11) **EP 2 375 317 B1**
(45) Date of publication and mention of the grant of the patent: **01.05.2019**
(21) Application number: 11153622.3
(22) Date of filing: 08.02.2011
(51) Int. Cl.: G06F 3/048

(54) **Mobile terminal and controlling method thereof**
Mobiles Endgerät und Steuerungsverfahren dafür
Terminal mobile et son procédé de contrôle

(30) Priority: 12.04.2010 KR 20100033153
(43) Date of publication of application: 12.10.2011
(73) Proprietor: LG ELECTRONICS INC., Yeongdeungpo-Gu Seoul 07336 (KR)
(72) Inventor: Jung, Jong Cheol, Seoul 153-801 (KR); Yun, Jae Woong, Seoul 153-801 (KR)
(74) Representative: Cabinet Plasseraud

(56) References cited:
- EP-A2- 2 166 437

## Description

### BACKGROUND OF THE INVENTION

### Field of the Invention

The present invention relates to a mobile terminal, and more particularly, to a mobile terminal and controlling method thereof. The present invention is suitable for checking types and statuses of applications currently executed in multitasking environment more conveniently.

### Discussion of the Related Art

Generally, terminals can be classified into mobile/portable terminals and stationary terminals. The mobile terminals can be classified into handheld terminals and vehicle mount terminals again according to possibility of user's direct portability.

As functions of the terminal are diversified, the terminal is implemented as a multimedia player provided with composite functions such as photographing of photos or moving pictures, playback of music or moving picture files, game play, broadcast reception and the like for example.

To support and increase of the terminal functions, it may be able to consider the improvement of structural parts and/or software parts of the terminal.

Recently, as a multitasking function of executing and controlling at least two applications simultaneously is implemented owing to the enhancement of mobile terminal performance, the demand for efficient user interfaces are ongoing to rise.

Document EP 2 166 437 discloses a method and apparatus for controlling the multitasking operations of a mobile terminal having at least one touchscreen based on the input signals corresponding to touch events detected on the touchscreen. An application is executed in response to a user request while at least one other application is running. An execution window of an application selected from the currently running applications is displayed in an auxiliary screen in response to a touch event detected on the touchscreen, and the execution screens of the applications running concurrently are displayed, except for the application whose execution window is displayed in the auxiliary screen, in a main screen, accumulatively.

### SUMMARY OF THE INVENTION

Accordingly, the present invention is directed to a mobile terminal and controlling method thereof that substantially obviate one or more problems due to limitations and disadvantages of the related art.

An object of the present invention is to provide a mobile terminal and controlling method thereof, by which a user is facilitated to check information on applications currently executed in multitasking environment.

Another object of the present invention is to provide a mobile terminal and controlling method thereof, by which an extent of the displayed information is changed according to a size of a region when statuses of applications currently executed are displayed on a prescribed region.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, a mobile terminal according to claim 1 and a method according to claim 12 are provided.

Preferred embodiments are provided in the dependent claims.

Accordingly, the present invention provides the following effects and/or advantages.

First of all, a mobile terminal according to at least one embodiment of the present invention displays a list of applications currently executed in a multitasking environment on a prescribed region, thereby facilitating the currently executed applications to be checked using the displayed list.

Secondly, the present invention is able to conveniently adjust an extent of displayed information by changing a size of a region on which a list of currently executed applications is displayed.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:
FIG. 1 is a block diagram of a mobile terminal according to one embodiment of the present invention;
FIG. 2 is a front perspective diagram of a mobile terminal according to one embodiment of the present invention;
FIG. 3 is a front diagram of a mobile terminal according to one embodiment of the present invention for explaining one operational status of the mobile terminal;
FIG. 4 is a flowchart of a process for checking a status of a currently executed application by providing a list of applications currently executed in a mobile terminal according to one embodiment of the present invention;
FIG. 5 is a diagram of screen configurations of a display for one example of a process for arranging and selecting a multitasking region according to one embodiment of the present invention;
FIG. 6 is a diagram of screen configurations of a display for one example of a procedure for checking information of a multitasking application according to one embodiment of the present invention;
FIG. 7 is a diagram of screen configurations of a display for one example of changing an extent of information displayed on a corresponding region if a size of a multitasking region is changed in a mobile terminal according to one embodiment of the present invention;
FIG. 8 is a flowchart for a process for checking a status of a currently executed application by providing a list of applications currently executed in a mobile terminal according to another embodiment of the present invention; and
FIG. 9 is a diagram of screen configurations of a display for a controller in a mobile terminal according to another embodiment of the present invention to recommend a multitasking region.

### DETAILED DESCRIPTION OF THE INVENTION

In the following detailed description, reference is made to the accompanying drawing figures which form a part hereof, and which show by way of illustration specific embodiments of the invention. It is to be understood by those of ordinary skill in this technological field that other embodiments may be utilized, and structural, electrical, as well as procedural changes may be made without departing from the scope of the present invention, as defined by the appended claims. Wherever possible, the same reference numbers will be used throughout the drawings to refer to the same or similar parts.

As used herein, the suffixes 'module', 'unit' and 'part' are used for elements in order to facilitate the disclosure only. Therefore, significant meanings or roles are not given to the suffixes themselves and it is understood that the 'module', 'unit' and 'part' can be used together or interchangeably.

The present invention can be applicable to a various types of mobile terminals, such as mobile phones, user equipment, smart phones, DTV, computers, digital broadcast terminals, personal digital assistants, portable multimedia players (PMP) and navigators.

However, by way of non-limiting example only, further description will be with regard to a mobile terminal 100, and it should be noted that such teachings may apply equally to other types of mobile terminals.

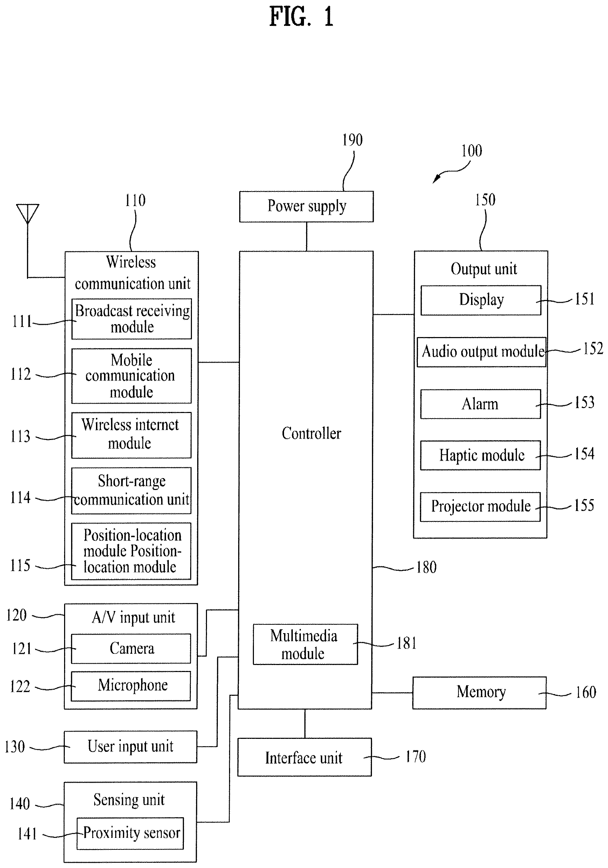

Fig. 1 is a block diagram of a mobile terminal 100 in accordance with an embodiment of the present invention. Fig. 1 shows the mobile terminal 100 according to one embodiment of the present invention includes a wireless communication unit 110, an A/V (audio/video) input unit 120, a user input unit 130, a sensing unit 140, an output unit 150, a memory 160, an interface unit 170, a controller 180, a power supply unit 190 and the like. FIG. 1 shows the mobile terminal 100 having various components, but it is understood that implementing all of the illustrated components is not a requirement. Greater or fewer components may alternatively be implemented.

In the following description, the above elements of the mobile terminal 100 are explained in sequence.

First of all, the wireless communication unit 110 typically includes one or more components which permits wireless communication between the mobile terminal 100 and a wireless communication system or network within which the mobile terminal 100 is located. For instance, the wireless communication unit 110 can include a broadcast receiving module 111, a mobile communication module 112, a wireless internet module 113, a short-range communication module 114, a position-location module 115 and the like.

The broadcast receiving module 111 receives a broadcast signal and/or broadcast associated information from an external broadcast managing server via a broadcast channel.

The broadcast channel may include a satellite channel and a terrestrial channel.

The broadcast managing server generally refers to a server which generates and transmits a broadcast signal and/or broadcast associated information or a server which is provided with a previously generated broadcast signal and/or broadcast associated information and then transmits the provided signal or information to a terminal. The broadcast signal may be implemented as a TV broadcast signal, a radio broadcast signal, and a data broadcast signal, among others. If desired, the broadcast signal may further include a broadcast signal combined with a TV or radio broadcast signal.

The broadcast associated information includes information associated with a broadcast channel, a broadcast program, a broadcast service provider, etc. And, the broadcast associated information can be provided via a mobile communication network. In this case, the broadcast associated information can be received by the mobile communication module 112.

The broadcast associated information can be implemented in various forms. For instance, broadcast associated information may include an electronic program guide (EPG) of digital multimedia broadcasting (DMB) and electronic service guide (ESG) of digital video broadcast-handheld (DVB-H).

The broadcast receiving module 111 may be configured to receive broadcast signals transmitted from various types of broadcast systems. By nonlimiting example, such broadcasting systems include digital multimedia broadcasting-terrestrial (DMB-T), digital multimedia broadcasting-satellite (DMB-S), digital video broadcast-handheld (DVB-H), the data broadcasting system known as media forward link only (MediaFLO®) and integrated services digital broadcast-terrestrial (ISDB-T). Optionally, the broadcast receiving module 111 can be configured suitable for other broadcasting systems as well as the above-explained digital broadcasting systems.

The broadcast signal and/or broadcast associated information received by the broadcast receiving module 111 may be stored in a suitable device, such as a memory 160.

The mobile communication module 112 transmits/receives wireless signals to/from one or more network entities (e.g., base station, external terminal, server, etc.). Such wireless signals may represent audio, video, and data according to text/multimedia messaging, among others.

The wireless internet module 113 supports Internet access for the mobile terminal 100. This module may be internally or externally coupled to the mobile terminal 100. In this case, the wireless Internet technology can include WLAN (Wireless LAN) (Wi-Fi), Wibro (Wireless broadband), Wimax (World Interoperability for Microwave Access), HSDPA (High Speed Downlink Packet Access), etc.

The short-range communication module 114 facilitates relatively short-range communications. Suitable technologies for implementing this module include radio frequency identification (RFID), infrared data association (IrDA), ultra-wideband (UWB), as well at the networking technologies commonly referred to as Bluetooth and ZigBee, to name a few.

The position-location module 115 identifies or otherwise obtains the location of the mobile terminal 100. If desired, this module may be implemented with a global positioning system (GPS) module.

Referring to FIG. 1, the audio/video (AN) input unit 120 is configured to provide audio or video signal input to the mobile terminal 100. As shown, the AN input unit 120 includes a camera 121 and a microphone 122. The camera 121 receives and processes image frames of still pictures or video, which are obtained by an image sensor in a video call mode or a photographing mode. And, the processed image frames can be displayed on the display 151.

The image frames processed by the camera 121 can be stored in the memory 160 or can be externally transmitted via the wireless communication unit 110. Optionally, at least two cameras 121 can be provided to the mobile terminal 100 according to environment of usage.

The microphone 122 receives an external audio signal while the portable device is in a particular mode, such as phone call mode, recording mode and voice recognition. This audio signal is processed and converted into electric audio data. The processed audio data is transformed into a format transmittable to a mobile communication base station via the mobile communication module 112 in case of a call mode. The microphone 122 typically includes assorted noise removing algorithms to remove noise generated in the course of receiving the external audio signal.

The user input unit 130 generates input data responsive to user manipulation of an associated input device or devices. Examples of such devices include a keypad, a dome switch, a touchpad (e.g., static pressure/capacitance), a jog wheel, a jog switch, etc.

The sensing unit 140 provides sensing signals for controlling operations of the mobile terminal 100 using status measurements of various aspects of the mobile terminal. For instance, the sensing unit 140 may detect an open/close status of the mobile terminal 100, relative positioning of components (e.g., a display and keypad) of the mobile terminal 100, a change of position of the mobile terminal 100 or a component of the mobile terminal 100, a presence or absence of user contact with the mobile terminal 100, orientation or acceleration/deceleration of the mobile terminal 100.

As an example, consider the mobile terminal 100 being configured as a slide-type mobile terminal. In this configuration, the sensing unit 140 may sense whether a sliding portion of the mobile terminal is open or closed. Other examples include the sensing unit 140 sensing the presence or absence of power provided by the power supply 190, the presence or absence of a coupling or other connection between the interface unit 170 and an external device. And, the sensing unit 140 can include a proximity sensor 141.

The output unit 150 generates outputs relevant to the senses of sight, hearing, touch and the like. And, the output unit 150 includes the display 151, an audio output module 152, an alarm unit 153, a haptic module 154, a projector module 155 and the like.

The display 151 is typically implemented to visually display (output) information associated with the mobile terminal 100. For instance, if the mobile terminal is operating in a phone call mode, the display will generally provide a user interface (Ul) or graphical user interface (GUI) which includes information associated with placing, conducting, and terminating a phone call. As another example, if the mobile terminal 100 is in a video call mode or a photographing mode, the display 151 may additionally or alternatively display images which are associated with these modes, the UI or the GUI.

The display module 151 may be implemented using known display technologies including, for example, a liquid crystal display (LCD), a thin film transistor-liquid crystal display (TFT-LCD), an organic light-emitting diode display (OLED), a flexible display and a three-dimensional display. The mobile terminal 100 may include one or more of such displays.

Some of the above displays can be implemented in a transparent or optical transmissive type, which can be named a transparent display. As a representative example for the transparent display, there is TOLED (transparent OLED) or the like. A rear configuration of the display 151 can be implemented in the optical transmissive type as well. In this configuration, a user is able to see an object in rear of a terminal body via the area occupied by the display 151 of the terminal body.

At least two displays 151 can be provided to the mobile terminal 100 in accordance with the implemented configuration of the mobile terminal 100. For instance, a plurality of displays can be arranged on a single face of the mobile terminal 100 in a manner of being spaced apart from each other or being built in one body. Alternatively, a plurality of displays can be arranged on different faces of the mobile terminal 100.

In case that the display 151 and a sensor for detecting a touch action (hereinafter called 'touch sensor') configures a mutual layer structure (hereinafter called 'touchscreen'), mobile terminal 100is able to use the display 151 as an input device as well as an output device. In this case, the touch sensor can be configured as a touch film, a touch sheet, a touchpad or the like.

The touch sensor can be configured to convert a pressure applied to a specific portion of the display 151 or a variation of a capacitance generated from a specific portion of the display 151 to an electric input signal. Moreover, mobile terminal 100 is able to configure the touch sensor to detect a pressure of a touch as well as a touched position or size.

If a touch input is made to the touch sensor, signal(s) corresponding to the touch is transferred to a touch controller. The touch controller processes the signal(s) and then transfers the processed signal(s) to the controller 180. Therefore, the controller 180 is able to know whether a prescribed portion of the display 151 is touched.

Referring to FIG. 1, a proximity sensor (not shown in the drawing) can be provided to an internal area of the mobile terminal 100 enclosed by the touchscreen or around the touchscreen. The proximity sensor is the sensor that detects a presence or non-presence of an object approaching a prescribed detecting surface or an object existing around the proximity sensor using an electromagnetic field strength or infrared ray without mechanical contact. Hence, the proximity sensor has durability longer than that of a contact type sensor and also has utility wider than that of the contact type sensor.

The proximity sensor can include one of a transmissive photoelectric sensor, a direct reflective photoelectric sensor, a mirror reflective photoelectric sensor, a radio frequency oscillation proximity sensor, an electrostatic capacity proximity sensor, a magnetic proximity sensor, an infrared proximity sensor and the like. In case that the touchscreen includes the electrostatic capacity proximity sensor, the touchscreen is configured to detect the proximity of a pointer using a variation of electric field according to the proximity of the pointer. In this case, the touchscreen (touch sensor) can be classified as the proximity sensor.

In the following description, for clarity, an action that a pointer approaches without contacting with the touchscreen to be recognized as located on the touchscreen is named 'proximity touch'. And, an action that a pointer actually touches the touchscreen is named 'contact touch'. The meaning of the position on the touchscreen proximity-touched by the pointer means the position of the pointer which vertically opposes the touchscreen when the pointer performs the proximity touch.

The proximity sensor detects a proximity touch and a proximity touch pattern (e.g., a proximity touch distance, a proximity touch duration, a proximity touch position, a proximity touch shift state, etc.). And, information corresponding to the detected proximity touch action and the detected proximity touch pattern can be outputted to the touchscreen.

The audio output module 152 functions in various modes including a call-receiving mode, a call-placing mode, a recording mode, a voice recognition mode, a broadcast reception mode and the like to output audio data which is received from the wireless communication unit 110 or is stored in the memory 160. During operation, the audio output module 152 outputs audio relating to a particular function (e.g., call received, message received, etc.). The audio output module 152 is often implemented using one or more speakers, buzzers, other audio producing devices, and combinations thereof.

The alarm unit 153 is output a signal for announcing the occurrence of a particular event associated with the mobile terminal 100. Typical events include a call received event, a message received event and a touch input received event. The alarm unit 153 is able to output a signal for announcing the event occurrence by way of vibration as well as video or audio signal. The video or audio signal can be outputted via the display 151 or the audio output unit 152. Hence, the display 151 or the audio output module 152 can be regarded as a part of the alarm unit 153.

The haptic module 154 generates various tactile effects that can be sensed by a user. Vibration is a representative one of the tactile effects generated by the haptic module 154. Strength and pattern of the vibration generated by the haptic module 154 are controllable. For instance, different vibrations can be outputted in a manner of being synthesized together or can be outputted in sequence.

The haptic module 154 is able to generate various tactile effects as well as the vibration. For instance, the haptic module 154 generates the effect attributed to the arrangement of pins vertically moving against a contact skin surface, the effect attributed to the injection/suction power of air though an injection/suction hole, the effect attributed to the skim over a skin surface, the effect attributed to the contact with electrode, the effect attributed to the electrostatic force, the effect attributed to the representation of hold/cold sense using an endothermic or exothermic device and the like.

The haptic module 154 can be implemented to enable a user to sense the tactile effect through a muscle sense of finger, arm or the like as well as to transfer the tactile effect through a direct contact. Optionally, at least two haptic modules 154 can be provided to the mobile terminal 100 in accordance with the corresponding configuration type of the mobile terminal 100.

The projector module 155 is the element for performing an image projector function using the mobile terminal 100. And, the projector module 155 is able to display an image, which is identical to or partially different at least from the image displayed on the display 151, on an external screen or wall according to a control signal of the controller 180.

In particular, the projector module 155 can include a light source (not shown in the drawing) generating light (e.g., laser) for projecting an image externally, an image producing means (not shown in the drawing) for producing an image to output externally using the light generated from the light source, and a lens (not shown in the drawing) for enlarging to output the image externally in a predetermined focus distance. And, the projector module 155 can further include a device (not shown in the drawing) for adjusting an image projected direction by mechanically moving the lens or the whole module.

The projector module 155 can be classified into a CRT (cathode ray tube) module, an LCD (liquid crystal display) module, a DLP (digital light processing) module or the like according to a device type of a display means. In particular, the DLP module is operated by the mechanism of enabling the light generated from the light source to reflect on a DMD (digital micro-mirror device) chip and can be advantageous for the downsizing of the projector module 151.

Preferably, the projector module 155 can be provided in a length direction of a lateral, front or backside direction of the mobile terminal 100. And, it is understood that the projector module 155 can be provided to any portion of the mobile terminal 100 according to the necessity thereof.

The memory unit 160 is generally used to store various types of data to support the processing, control, and storage requirements of the mobile terminal 100. Examples of such data include program instructions for applications operating on the mobile terminal 100, contact data, phonebook data, messages, audio, still pictures, moving pictures, etc. And, a recent use history or a cumulative use frequency of each data (e.g., use frequency for each phonebook, each message or each multimedia) can be stored in the memory unit 160. Moreover, data for various patterns of vibration and/or sound outputted in case of a touch input to the touchscreen can be stored in the memory unit 160.

The memory 160 may be implemented using any type or combination of suitable volatile and non-volatile memory or storage devices including hard disk, random access memory (RAM), static random access memory (SRAM), electrically erasable programmable read-only memory (EEPROM), erasable programmable read-only memory (EPROM), programmable read-only memory (PROM), read-only memory (ROM), magnetic memory, flash memory, magnetic or optical disk, multimedia card micro type memory, card-type memory (e.g., SD memory, XD memory, etc.), or other similar memory or data storage device. And, the mobile terminal 100 is able to operate in association with a web storage for performing a storage function of the memory 160 on Internet.

The interface unit 170 is often implemented to couple the mobile terminal 100 with external devices. The interface unit 170 receives data from the external devices or is supplied with the power and then transfers the data or power to the respective elements of the mobile terminal 100 or enables data within the mobile terminal 100 to be transferred to the external devices. The interface unit 170 may be configured using a wired/wireless headset port, an external charger port, a wired/wireless data port, a memory card port, a port for coupling to a device having an identity module, audio input/output ports, video input/output ports, an earphone port and/or the like.

The identity module is the chip for storing various kinds of information for authenticating a use authority of the mobile terminal 100 and can include User Identify Module (UIM), Subscriber Identify Module (SIM), Universal Subscriber Identity Module (USIM) and/or the like. A device having the identity module (hereinafter called 'identity device') can be manufactured as a smart card. Therefore, the identity device is connectible to the mobile terminal 100 via the corresponding port.

When the mobile terminal 110 is connected to an external cradle, the interface unit 170 becomes a passage for supplying the mobile terminal 100 with a power from the cradle or a passage for delivering various command signals inputted from the cradle by a user to the mobile terminal 100. Each of the various command signals inputted from the cradle or the power can operate as a signal enabling the mobile terminal 100 to recognize that mobile terminal 100is correctly loaded in the cradle.

The controller 180 typically controls the overall operations of the mobile terminal 100. For example, the controller 180 performs the control and processing associated with voice calls, data communications, video calls, etc. The controller 180 may include a multimedia module 181 that provides multimedia playback. The multimedia module 181 may be configured as part of the controller 180, or implemented as a separate component.

Moreover, the controller 180 is able to perform a pattern recognizing process for recognizing a writing input and a picture drawing input carried out on the touchscreen as characters or images, respectively.

The power supply unit 190 provides power required by the various components for the mobile terminal 100. The power may be internal power, external power, or combinations thereof.

Various embodiments described herein may be implemented in a computer-readable medium using, for example, computer software, hardware, or some combination thereof. For a hardware implementation, the embodiments described herein may be implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, other electronic units designed to perform the functions described herein, or a selective combination thereof. Such embodiments may also be implemented by the controller 180.

For a software implementation, the embodiments described herein may be implemented with separate software modules, such as procedures and functions, each of which perform one or more of the functions and operations described herein. The software codes can be implemented with a software application written in any suitable programming language and may be stored in memory such as the memory 160, and executed by a controller or processor, such as the controller 180.

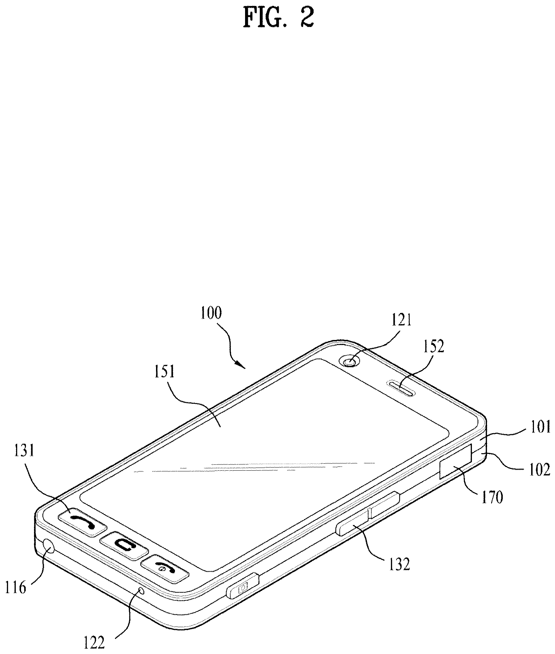

FIG. 2 is a front perspective diagram of a mobile terminal according to one embodiment of the present invention.

The mobile terminal 100 shown in the drawing has a bar type terminal body. Yet, the mobile terminal 100 may be implemented in a variety of different configurations. Examples of such configurations include folder-type, slide-type, rotational-type, swing-type and combinations thereof. For clarity, further disclosure will primarily relate to a bar-type mobile terminal 100. However such teachings apply equally to other types of mobile terminals.

Referring to FIG. 2, the mobile terminal 100 includes a case (casing, housing, cover, etc.) configuring an exterior thereof. In the present embodiment, the case can be divided into a front case 101 and a rear case 102. Various electric/electronic parts are loaded in a space provided between the front and rear cases 101 and 102. Optionally, at least one middle case can be further provided between the front and rear cases 101 and 102 in addition.

The cases 101 and 102 are formed by injection molding of synthetic resin or can be formed of metal substance such as stainless steel (STS), titanium (Ti) or the like for example.

A display 151, an audio output unit 152, a camera 121, user input units 130/131 and 132, a microphone 122, an interface 180 and the like can be provided to the terminal body, and more particularly, to the front case 101.

The display 151 occupies most of a main face of the front case 101. The audio output unit 151 and the camera 121 are provided to an area adjacent to one of both end portions of the display 151, while the user input unit 131 and the microphone 122 are provided to another area adjacent to the other end portion of the display 151. The user input unit 132 and the interface 170 can be provided to lateral sides of the front and rear cases 101 and 102.

The input unit 130 is manipulated to receive a command for controlling an operation of the terminal 100. And, the input unit 130 is able to include a plurality of manipulating units 131 and 132. The manipulating units 131 and 132 can be named a manipulating portion and may adopt any mechanism of a tactile manner that enables a user to perform a manipulation action by experiencing a tactile feeling.

Content inputted by the first or second manipulating unit 131 or 132 can be diversely set. For instance, such a command as start, end, scroll and the like is inputted to the first manipulating unit 131. And, a command for a volume adjustment of sound outputted from the audio output unit 152, a command for a switching to a touch recognizing mode of the display 151 or the like can be inputted to the second manipulating unit 132.

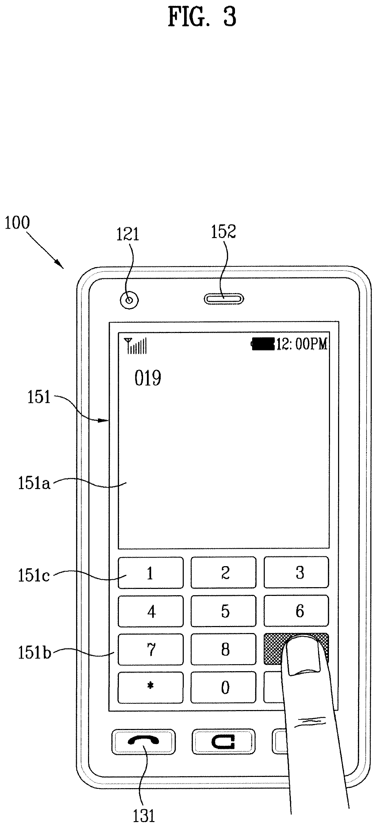

Interconnected operational mechanism between the display 151 and the touchpad 135 are explained with reference to FIG. 3 as follows.

FIG. 3 is a front-view diagram of a terminal according to one embodiment of the present invention for explaining an operational state thereof.

First of all, various kinds of visual information can be displayed on the display 151. And, theses information can be displayed in characters, numerals, symbols, graphics, icons and the like.

In order to input the information, at least one of the characters, numerals, symbols, graphics and icons are represented as a single predetermined array to be implemented in a keypad formation. And, this keypad formation can be so-called 'soft keys'.

FIG. 3 shows that a touch applied to a soft key is inputted through a front face of a terminal body.

The display 151 is operable through an entire area or by being divided into a plurality of regions. In the latter case, a plurality of the regions can be configured interoperable.

For instance, an output window 151a and an input window 151b are displayed on the display 151. A soft key 151c' representing a digit for inputting a phone number or the like is outputted to the input window 151b. If the soft key 151c' is touched, a digit corresponding to the touched soft key is outputted to the output window 151a. If the first manipulating unit 131 is manipulated, a call connection for the phone number displayed on the output window 151a is attempted.

Besides, the display 151 or the touchpad 135 can be configured to receive a touch input by scroll. A user scrolls the display 151 or the touchpad 135 to shift a cursor or pointer located at an entity (e.g., icon or the like) displayed on the display 151. Furthermore, in case that a finger is shifted on the display 151 or the touchpad 135, a path of the shifted finger can be visually displayed on the display 151. This may be useful in editing an image displayed on the display 151.

To cope with a case that both of the display (touch screen) 151 and the touchpad 135 are touched together within a predetermined time range, one function of the terminal can be executed. The above case of the simultaneous touch may correspond to a case that the terminal body is held by a user using a thumb and a first finger (clamping). The above function can include activation or deactivation for the display 151 or the touchpad 135.

For clarity and convenience of the following description, a mobile terminal mentioned in the following description is assumed as including at least one of the components shown in FIG. 1. Meanwhile, such a graphic for pointing at a specific object on a display unit or selecting a menu from the display unit as an arrow, a finger and the like is called a pointer or a cursor. Yet, the pointer is frequently used to mean a finger, a stylus pen or the like for a touch manipulation and the like. In order to clearly discriminate the pointer and the cursor from each other in this disclosure, a graphic displayed on a display unit is named a cursor and such a physical means for performing a touch, a proximity touch, a gesture and the like as a finger, a stylus pen and the like is named a pointer.

In general, an application is conceptionally used as software separately installed and/or executed. Yet, an application mentioned in the description of the present invention conceptionally indicates all targets that visually display information on a prescribed region when a specific function is executed. The controller 180 of the mobile terminal according to the present invention is able to control at least two applications simultaneously. The executed applications are simultaneously displayed on partitioned screens of the display unit 151, respectively. Alternatively, one of the executed applications is displayed on a whole screen of the display unit 151. Alternatively, one of the executed applications is displayed on the screen in a manner of blocking at least one portion of a region related to another application.

### First Embodiment

A mobile terminal and controlling method thereof according to one embodiment of the present invention are provided as follows. In particular, after a list of applications currently and simultaneously executed in multitasking environment has been provided, statuses of the currently executed simultaneous applications can be checked and selected step by step.

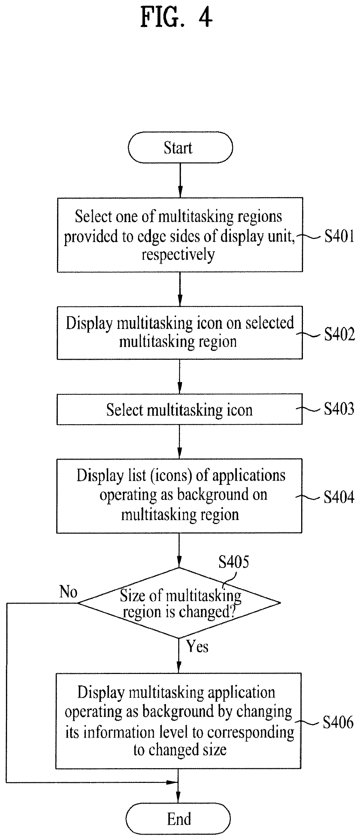

FIG. 4 is a flowchart of a process for checking a status of a currently executed application by providing a list of applications currently executed simultaneously in a mobile terminal according to one embodiment of the present invention.

Referring to FIG. 4, regions (hereinafter named 'multitasking regions' for clarity) for indicating statuses of currently executed simultaneous applications can be provided to edge sides of a mobile terminal according to one embodiment of ht present invention, respectively. The multitasking region is the region on which information of an application executed by multitasking is displayed. The multitasking region is previously determined according to a currently activated application. Alternatively, the multitasking region can be set by a user in advance. Alternatively, the multitasking region can be arbitrarily set by a user each time. The multitasking regions can be arranged in various sizes and shapes, respectively. For clarity, in the following description, assume that the multitasking regions are arranged in four directions (e.g., top, bottom, right and left), respectively.

First of all, while a plurality of applications is being simultaneously executed, a user is able to select one of a plurality of multitasking regions [S401].

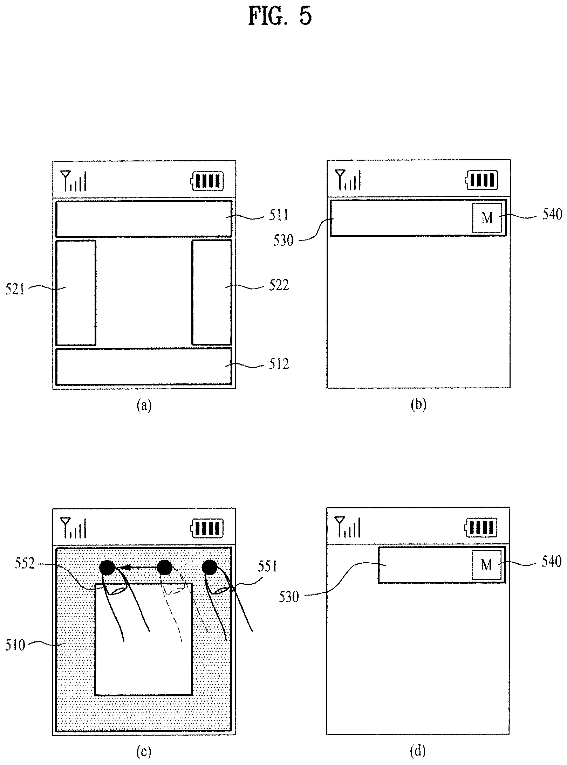

The arranged formation of the multitasking regions and the multitasking region selecting method shall be described in detail with reference to FIG. 5 later in this disclosure.

If the corresponding multitasking region is selected, an icon for displaying a list of the simultaneously executed applications can be displayed on the selected region [S402].

If the user selects the icon [S403], the list can be displayed. And, the list can have one of types including icon, text, diagram and combination thereof [S404].

In this case, the applications operating as backgrounds except the simultaneously activated applications are included in the list. Alternatively, both of the simultaneously activated applications and the background-operating applications can be included in the list.

Here, the background-operating application may mean an application, which is not currently displayed on the display unit 151 or partially blocked. Hereinafter, the "background-operating application" can be replaced by such a terminology as "background application" or "application running in the background".

In particular, the application operating as background can mean a currently deactivated application, of which function is normally executed, or an application of which executed region on the display unit is blocked in part by an activated application at least. Activation means that an application operates with a highest priority to be displayed on a whole screen. Alternatively, activation means a status that an executed region of an application is not blocked by another application. Alternatively, activation means a status that a latest command inputted by a user is performed or a command is currently inputted.

After the list has been displayed on the multitasking region, the user is able to change a size of the multitasking region [S405].

If the size of the multitasking region is changed, operational statuses and/or information extents of the simultaneously activated applications included in the application list can be represented as a plurality of levels [S406].

In the above-described process, the icon displaying and selecting steps can be skipped. Instead, the list can be directly displayed on the selected multitasking region.

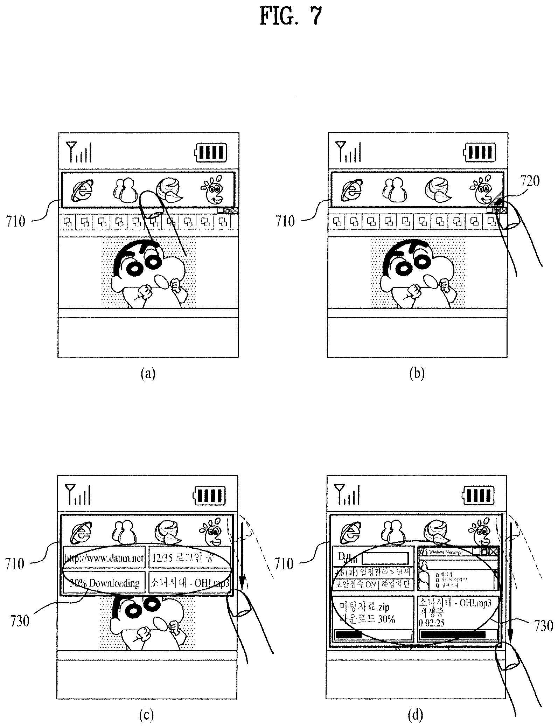

Details of changing a size of the multitasking region and a corresponding information extent shall be described with reference to FIG. 7 later.

Hereinafter, the "icon for displaying the list of the currently executed simultaneous applications" can be replaced by such a terminology as "multitasking icon" or "list display icon". Moreover, the "list of the currently executed simultaneous applications" can be replaced by such a terminology as "multitasking list".

### Arrangement and selection of multitasking region

FIG. 5 is a diagram of screen configurations of a display for one example of a process for arranging and selecting a multitasking region according to one embodiment of the present invention.

For clarity in FIG. 5, a type of an application currently activated and displayed is omitted and multitasking regions are schematically shown.

Referring to FIG. 5 (a), multitasking regions can be provided as a rectangular formation to edge sides in four directions (e.g., top direction 511, bottom direction 512, left direction 521 and right direction 522), respectively. In this case, the multitasking region is displayed in a manner that a prescribed visual effect (e.g., an outline effect, a semitransparent effect, etc.) is always given to the corresponding multitasking region according to a currently activated application. Alternatively, if a prescribed input is made via the user input unit 30, the visual effect can be given to the corresponding multitasking region.

A selection of the multitasking region can be performed by one step or two steps.

If the visual effect to distinguish the multitasking region is given or a user is aware of the multitasking region despite that the visual effect for distinguishing the multitasking region does not exist, the selection can be performed by one step. In particular, if a touch input having a prescribed pattern to a specific multitasking region is detected on the touchscreen or a hardware key button mapped to a specific multitasking selection function or a virtual key button on the touchscreen is manipulated, the controller 180 is able to recognize the corresponding manipulation of the key button as an input for selecting the specific multitasking region.

Regarding the two-step selection of the multitasking region, first of all, if a touch input having a prescribed pattern is detected on the touchscreen or a hardware/virtual key button for a multitasking region display is manipulated, the controller 180 is able to give the aforesaid visual effect. Secondly, if a user applies a touch input to a specific multitasking region or selects the specific multitasking region by manipulating a cursor displayed on the display unit via a navigation key and/or the like or a hardware key button mapped to a specific multitasking selection function or a virtual key button on the touchscreen is manipulated, the controller 180 is able to recognize the corresponding manipulation of the key button as an input for selecting the specific multitasking region.

In the above-mentioned selecting process, if a touch input having a prescribed pattern is used, the corresponding example can include one of a general touch input, a long touch, a consecutive touch for inputting a plurality of touches consecutively within prescribed duration, a drag touch having a specific trace and the like.

If one of the multitasking regions is selected, referring to FIG. 5 (b), a multitasking icon 540 can be displayed within the corresponding region 530.

Meanwhile, referring to FIG. 5 (c), a user is able to randomly select a multitasking region through a multi-touch for identifiably recognizing touch inputs simultaneously applied to at least two points. In particular, when a candidate region 510 for a multitasking region is set on the touchscreen, a user fixes one pointer 551 to the candidate region 510, applies a drag input via another pointer 552, and is then able to release both of the pointers 551 and 552 from the touch states of the two pointers. As a result, referring to FIG. 5 (d), if a region 530 between the final touch release points of the two pointers is selected, a multitasking region and a multitasking icon 540 can be displayed. Of course, a prescribed visual effect can be given to the candidate region as well.

Although FUG. 5 (c) exemplarily shows that one pointer 551 is fixed, a drag input can be inputted via both of the two pointers. In case that the multitasking region designation is performed by two steps including 1) a candidate region display and 2) a multitasking region designation in a candidate region, a drag touch for the multitasking region designation can be inputted using one pointer.

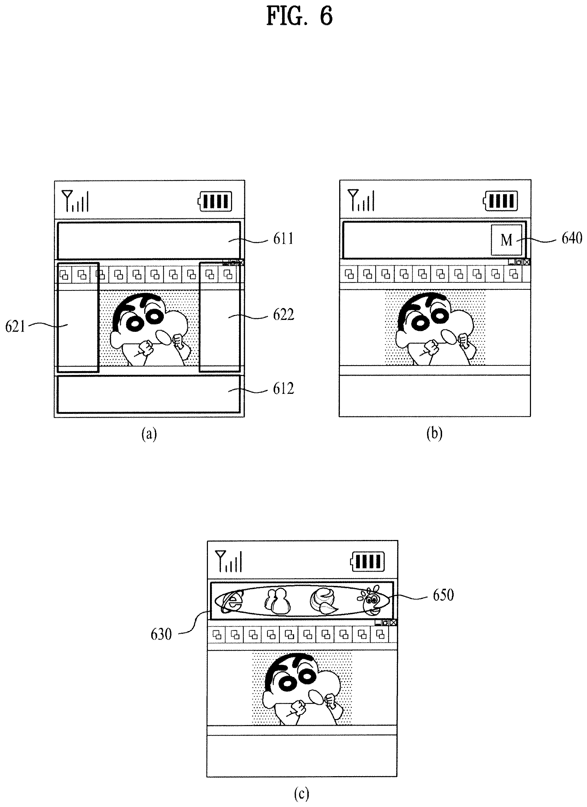

In the following description, a detailed process for selecting a multitasking region and a type of displaying an application list according to one embodiment of the present invention are explained with reference to FIG. 6 for example.

FIG. 6 is a diagram of screen configurations of a display for one example of a procedure for checking information of a multitasking application according to one embodiment of the present invention.

In the following embodiments including the embodiment shown in FIG. 6, assume that a currently activated application is a picture file viewer displayed on a whole screen. And, assume that background applications include a web browser, an instant messenger, a file downloader and a music play program. These applications are just exemplary. Alternatively, applications of other types different from those of the above applications are executable more or less.

Referring to FIG. 6 (a), a picture file viewer is activated on a whole screen of the display unit of the mobile terminal according to the present invention on the above-described assumptions. A user is then able to select a top multitasking region 611 from a plurality of multitasking regions respectively provided to a top side 611, a bottom side 612, a left side 621 and a right side 622 by one of the methods described with reference to FIG. 5.

If so, referring to FIG. 6 (b), a multitasking icon 640 can be displayed within the selected multitasking region 630. If a multitasking icon is not selected within a prescribed duration, a visual effect for discriminating a multitasking region and a multitasking icon can disappear sequentially or simultaneously.

If the multitasking icon 640 is selected, referring to FIG. 6 (c), icons respectively corresponding to four applications simultaneously operating as background can be displayed as an application list on the selected multitasking region. The user is then able to check the types and number of the applications currently executed as background via the displayed icons.

### Size change of multitasking region and corresponding display information change

FIG. 7 is a diagram of screen configurations of a display for one example of changing an extent of information displayed on a corresponding region if a size of a multitasking region is changed in a mobile terminal according to one embodiment of the present invention.

In FIG. 7, assume a situation after completion of a display of an application list.

A size change of a multitasking region according to the present embodiment can be performed through a drag input that is inputted to the touchscreen.

A start point of a drag input is a random point on a multitasking region 710 [FIG. 7 (a)] or a previously designated point 720 for a size change [FIG. 7 (b)].

In case that a drag input to the touchscreen is detected, in order to change an extent of status information of each application included in an application list, the controller 180 applies the change by real time according to a drag extent. Alternatively, the controller 180 is able to apply the change collectively when the drag input is terminated (i.e., when the touch input is released).

In case that the multitasking region has a size amounting to a half of the touchscreen size through the drag input, the information 730 of each application can be displayed on a text level [FIG. 7 (c)].

If the multitasking region is changed greater than that of the case shown in FIG. 7 (c), the information 730 of each application can further include additional information, which is generated from reducing an executed screen of the corresponding application by a prescribed ratio, such as a thumbnail, a graph, a diagram and the like [FIG. 7 (d)]. If this additional information is considerably included or a detailed extent of the status information is raised, it can be said that 'complexity' is raised. If this additional information is omitted or a detailed extent of the status information is low (i.e., simple), it can be said that 'complexity' is lowered.

The application information shown in FIG. 7 is exemplary, by which the present invention is non-limited. Alternatively, the present invention is applicable to various kinds of information display steps and types.

Therefore, by the present method, a user is facilitated to check an amount and types of currently executed application in a multitasking region. And, the user is able to check the information at a specific level by changing a size of the multitasking region.

### Second Embodiment

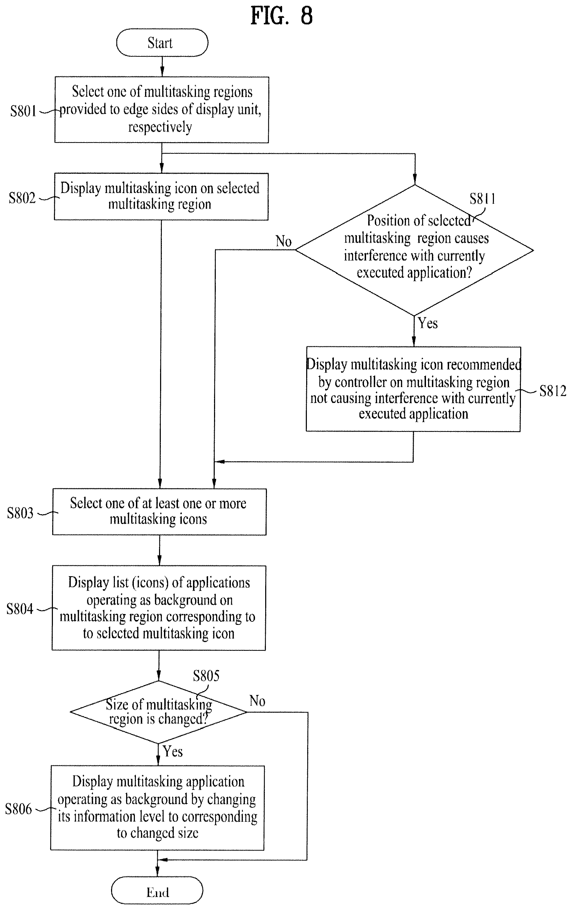

According to another embodiment of the present invention, a controller is able to recommend a multitasking region to a user according to a currently activated application. This is explained with reference to FIG. 8 as follows.

FIG. 8 is a flowchart for a process for checking a status of a currently executed application by providing a list of currently executed simultaneous applications in a mobile terminal according to another embodiment of the present invention. Since a type of a multitasking region and a method of selecting a multitasking region are similar to those in the description of the first embodiment, the redundant description shall be omitted from the following description for clarity.

Referring to FIG. 8, a user is able to select one of multitasking regions [S801]. And, a multitasking icon can be displayed on the selected multitasking region [S802].

In this case, the controller 180 is able to determine whether the selected multitasking region has an influence on a display or function control of a currently activated application [S811].

As a result, in case of determining that the selected multitasking region has the influence, the controller 180 enables a multitasking icon to be displayed on a multitasking region having no influence on the currently activated application or a multitasking region (i.e., a multitasking region recommended by the controller 180) having influence smaller than that of the selected multitasking region [S812].

Therefore, the multitasking icon of the user-selected multitasking region can be displayed on the display unit. In case that the selected multitasking region causes an interference with the currently activated application, the multitasking icon can be displayed on the multitasking region recommended by the controller 180.

Afterwards, the user is able to select one of at least two multitasking icons if necessary [S803].

Since the steps S804 to S806 in the following are similar to the former steps S404 to S406 described with reference to FIG. 4, the redundant description shall be omitted from the following description.

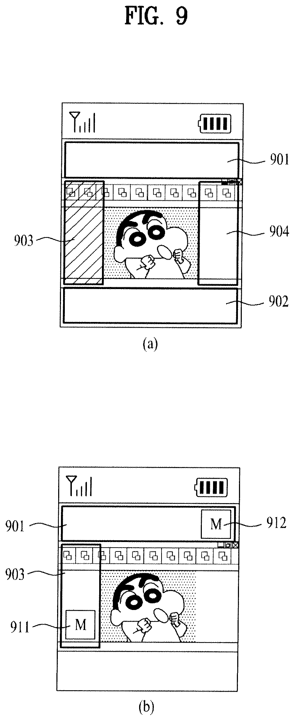

In the following description, a detailed process for the controller to recommend the multitasking region is explained with reference to FIG. 9.

FIG. 9 is a diagram of screen configurations of a display for a controller in a mobile terminal according to another embodiment of the present invention to recommend a multitasking region.

Referring to FIG. 9 (a), a picture file viewer is activated on the display unit of the mobile terminal according to the present invention. And, multitasking regions can be provided to four sides (e.g., top 901, bottom 902, left 903 and right 904), respectively.

In an exemplary scenario, a user selects the multitasking region 903 provided to the left side. However, because the multitasking region 903 located on the left side is overlapped with a left side of an executed region of the picture file viewer corresponding to a currently activated application, multitasking region 903 may cause an interference with a user's control of the picture file viewer.

Accordingly, the controller 180 recognizes the interference. Referring to FIG. 9 (b), the controller 180 then displays a multitasking icon 912 on a multitasking region 901 thus causing no interference with the user's control of the picture file viewer. In one embodiment, both regions 901 and 903 are active, along with icons 911 and 912. In another embodiment, the interfering region and corresponding icon are either non-active or are removed from the screen.

In the above described embodiments, a pointer-using touch action can be replaced by a command input using a cursor manipulated via a navigation key or a key button corresponding to the navigation key. If a specific application is selected from an application list, a currently activated application operates as background and the selected application can be activated.

According to one embodiment of the present invention, the above-described methods can be implemented in a program recorded medium as computer-readable codes. The computer-readable media include all kinds of recording devices in which data readable by a computer system are stored. The computer-readable media include ROM, RAM, CD-ROM, magnetic tapes, floppy discs, optical data storage devices, and the like for example and also include carrier-wave type implementations (e.g., transmission via Internet).

The aforementioned embodiments are achieved by combination of structural elements and features of the present invention in a predetermined type. Each of the structural elements or features should be considered selectively unless specified separately. Each of the structural elements or features may be carried out without being combined with other structural elements or features. Also, some structural elements and/or features may be combined with one another, within the scope of the appended claims, to constitute the embodiments of the present invention.

It will be apparent to those skilled in the art that various modifications and variations can be made in the present invention without departing from the scope of the invention, as defined by the appended claims.

## Claims

1. A mobile terminal, comprising:
a display unit (151) including a touchscreen;
a user input unit (130); and
a controller (180) operatively connected to the display unit and the user input unit, wherein the controller is configured to :
simultaneously execute a plurality of applications, and
while displaying, on the display unit, information relating to one of the plurality of simultaneously executing applications:
select (S401) a first region among one or more pre-defined candidate regions of the display unit in response to a first input applied to the first region via the touchscreen, the mobile terminal being **characterized in that** the controller is further configured to:
display (S402) a multitasking icon on the selected multitasking region,
select (S403) the multitasking icon in response to a second input;
upon such selection, display (S404) a list of at least some of the simultaneously executed applications on the selected first region,
increase (S405) a size of the first region in response to a drag command applied to the first region via the touchscreen, and
display (S406) additional information about one or more of the plurality of simultaneously executing applications on the first region, wherein the level of said additional information is determined based on the changed size of the first region.

2. The mobile terminal of claim 1, wherein the list includes icons corresponding to one or more of the simultaneously executed applications of the list.

3. The mobile terminal of any one of claims 1 or 2, wherein the one or more candidate regions are provided to at least one of multiple edge sides of the display unit (511, 512, 521, 522).

4. The mobile terminal of claim 3, wherein the one or more candidate regions include at least two candidate regions on different edge sides of the display unit.

5. The mobile terminal of any one of claims 1 to 4, wherein the list includes a reference to at least one application running in background.

6. The mobile terminal of any one of claims 1 to 5, wherein the controller is further configured to :
cause the first region to be distinguished from the information relating to the operation by a prescribed visual effect, or
display at least one item in the list in accordance with prescribed visual effect.

7. The mobile terminal of any one of claims 1 to 6, wherein the first input includes one selected from the group comprising:
a drag input having a preset trace inputted to the touchscreen;
a long touch inputted to the touchscreen;
a repeated touch consecutively inputted to the touchscreen within a prescribed duration; and
a multi-touch simultaneously inputted to two points on the touchscreen.

8. The mobile terminal of any one of claims 1 to 7, wherein the controller is further configured to:
display a list display icon on the first region after the first region is selected, and
display the list when the first input is a touch input to the list display icon.

9. The mobile terminal of claim 8,
wherein the one or more pre-defined candidate regions includes two or more pre-defined candidate regions, and
wherein the controller is further configured to :
determine whether the first region overlaps with an executable region of the currently displayed information, and
automatically display the list display icon on another of the two or more pre-defined candidate regions if the first region overlaps with the executable region.

10. The mobile terminal of claim 9, wherein one of the list display icon and the list on the first region is not active if the first region overlaps with the executable region.

11. The mobile terminal of claim 9, wherein one of the list display icon and the list on the first region is active even if the first region overlaps with the executable region.

12. A method of controlling a mobile terminal including a display unit having a touchscreen, a user input unit, and a controller operatively connected to the display unit and the user input unit, the method comprising:
simultaneously executing a plurality of applications; and
while displaying, on the display unit, information relating to one of the plurality of simultaneously executing applications:
selecting (S401) a first region among one or more pre-defined candidate regions of the display unit upon receiving a first input to the first region via the touchscreen, the method being **characterized in** further comprising:
displaying (S402) a multitasking icon on the selected multitasking region,
selecting (S403) the multitasking icon in response to a second input,
upon such selection, displaying (S404) a list of at least some of the simultaneously executed applications on the first selected region, wherein the list includes icons corresponding to one or more of the simultaneously executed applications of the list,
increasing (S405) a size of the first region in response to a drag command applied to the first region via the touchscreen, and
displaying (S406) additional information about one or more of the plurality of simultaneously executing applications on the first region, wherein the level of said additional information is determined based on the changed size of the first region.

## Patentansprüche

1. Mobiles Endgerät mit:
einer Anzeigeeinheit (151), die einen Berührungsbildschirm aufweist;
einer Benutzereingabeeinheit (130); und
einem Kontroller (180), der betrieblich mit der Anzeigeeinheit und der Benutzereingabeeinheit verbunden ist, wobei der Kontroller konfiguriert ist:
gleichzeitig eine Vielzahl von Anwendungen auszuführen, und
während des Anzeigens von Informationen auf der Anzeigeeinheit, die eine der Vielzahl der gleichzeitig ausgeführten Anwendungen betreffen:
einen ersten Bereich unter einem oder mehreren vordefinierten Kandidatenbereichen der Anzeigeeinheit als Reaktion auf eine erste Eingabe auszuwählen (S401), die auf den ersten Bereich über den Berührungsbildschirm angewendet wird, wobei das mobile Endgerät **dadurch gekennzeichnet ist, dass** der Kontroller ferner konfiguriert ist:
ein Multitaskingpiktogramm auf dem ausgewählten Multitaskingbereich anzuzeigen (S402),
das Multitaskingpiktogramm als Reaktion auf eine zweite Eingabe auszuwählen (S403); bei einer solchen Auswahl eine Liste von mindestens einigen der gleichzeitig ausgeführten Anwendungen auf dem ausgewählten ersten Bereich anzuzeigen (S404),
eine Größe des ersten Bereichs als Reaktion auf einen Ziehbefehl zu vergrößern (S405), der über den Berührungsbildschirm auf ersten Bereich angewendet wird, und
zusätzliche Informationen über eine oder mehrere der Vielzahl der gleichzeitig ausgeführten Anwendungen auf dem ersten Bereich anzuzeigen (S406), wobei das Niveau der zusätzlichen Informationen beruhend auf der geänderten Größe des ersten Bereichs festgelegt wird.

2. Mobiles Endgerät nach Anspruch 1, wobei die Liste Piktogramme aufweist, die einem oder mehreren der gleichzeitig ausgeführten Anwendungen der Liste entsprechen.

3. Mobiles Endgerät nach einem der Ansprüche 1 oder 2, wobei der eine oder die mehreren Kandidatenbereiche an mindestens einer von mehreren Seitenkanten der Anzeigeeinheit (511, 512, 521, 522) vorgesehen sind.

4. Mobiles Endgerät nach Anspruch 3, wobei der eine oder die mehreren Kandidatenbereiche mindestens zwei Kandidatenbereiche an unterschiedlichen Seitenkanten der Anzeigeeinheit aufweisen.

5. Mobiles Endgerät nach einem der Ansprüche 1 bis 4, wobei die Liste einen Verweis auf mindestens eine Anwendung aufweist, die im Hintergrund ausgeführt wird.

6. Mobiles Endgerät nach einem der Ansprüche 1 bis 5, wobei der Kontroller ferner konfiguriert ist:
zu bewirken, dass sich der erste Bereich von Informationen, die den Betrieb betreffen, durch einen vorgeschriebenen visuellen Effekt unterscheidet, oder
mindestens einen Eintrag auf der Liste in Übereinstimmung mit dem vorgeschriebenen visuellen Effekt anzuzeigen.

7. Mobiles Endgerät nach einem der Ansprüche 1 bis 6, wobei die erste Eingabe eine aufweist, die aus der Gruppe ausgewählt ist, die aufweist:
eine Zieheingabe, die eine voreingestellte Spur aufweist, die auf dem Berührungsbildschirm eingegeben wird;
eine lange Berührung, die auf dem Berührungsbildschirm eingegeben wird;
eine wiederholte Berührung, die innerhalb einer vorgeschriebenen Zeitspanne aufeinanderfolgend auf dem Berührungsbildschirm eingegeben wird; und
eine mehrfache Berührung, die gleichzeitig an zwei Punkten auf dem Berührungsbildschirm eingegeben wird.

8. Mobiles Endgerät nach einem der Ansprüche 1 bis 7, wobei der Kontroller ferner konfiguriert ist:
ein Listenanzeigepiktogramm auf dem ersten Bereich anzuzeigen, nachdem der erste Bereich ausgewählt worden ist, und
die Liste anzuzeigen, wenn die erste Eingabe eine Berührungseingabe auf dem Listenanzeigepiktogramm ist.

9. Mobiles Endgerät nach Anspruch 8,
wobei der eine oder die mehreren vordefinierten Kandidatenbereiche zwei oder mehr vordefinierte Kandidatenbereiche aufweisen, und
wobei der Kontroller ferner konfiguriert ist:
festzustellen, ob sich der erste Bereich mit einem ausführbaren Bereich der gegenwärtig angezeigten Informationen überlappt, und
automatisch das Listenanzeigepiktogramm auf einem anderen der beiden oder der mehren vordefinierten Kandidatenbereiche anzuzeigen, wenn sich der erste Bereich mit dem ausführbaren Bereich überlappt.

10. Mobiles Endgerät nach Anspruch 9, wobei das Listenanzeigepiktogramm oder die Liste auf dem ersten Bereich nicht aktiv ist, wenn sich der erste Bereich mit dem ausführbaren Bereich überlappt.

11. Mobiles Endgerät nach Anspruch 9, wobei das Listenanzeigepiktogramm oder die Liste auf dem ersten Bereich selbst dann aktiv ist, wenn sich der erste Bereich mit dem ausführbaren Bereich überlappt.

12. Verfahren zum Steuern eines mobilen Endgeräts, das eine Anzeigeeinheit mit einem Berührungsbildschirm, eine Benutzereingabeeinheit und einen Kontroller aufweist, der wirksam mit der Anzeigeeinheit und der Benutzereingabeeinheit verbunden ist, wobei das Verfahren aufweist:
gleichzeitiges Ausführen einer Vielzahl von Anwendungen; und
während des Anzeigens von Informationen auf der Anzeigeeinheit, die eine der Vielzahl der gleichzeitig ausgeführten Anwendungen betreffen:
Auswählen (S401) eines ersten Bereichs unter einem oder mehreren vordefinierten Kandidatenbereichen der Anzeigeeinheit beim Empfangen einer ersten Eingabe auf dem ersten Bereich über den Berührungsbildschirm, wobei Verfahren **dadurch gekennzeichnet ist, dass** es ferner aufweist:
Anzeigen (S402) eines Multitaskingpiktogramms auf dem ausgewählten Multitaskingbereich,
Auswählen (S403) des Multitaskingpiktogramms als Reaktion auf eine zweite Eingabe, bei einer solchen Auswahl, Anzeigen (S404) einer Liste von mindestens einigen der gleichzeitig ausgeführten Anwendungen auf dem ersten ausgewählten Bereich, wobei die Liste Piktogramme aufweist, die einem oder mehreren der gleichzeitig ausgeführten Anwendungen der Liste entsprechen,
Vergrößern (S405) einer Größe des ersten Bereichs als Reaktion auf einen Ziehbefehl, der über den Berührungsbildschirm auf ersten Bereich angewendet wird, und
Anzeigen (S406) von zusätzlichen Informationen über eine oder mehrere der Vielzahl der gleichzeitig ausgeführten Anwendungen auf dem ersten Bereich, wobei das Niveau der zusätzlichen Informationen beruhend auf der geänderten Größe des ersten Bereichs festgelegt wird.

## Revendications

1. Terminal mobile, comprenant :
une unité d'affichage (151) incluant un écran tactile ;
une unité d'entrée d'utilisateur (130) ; et
un contrôleur (180) relié de manière opérationnelle à l'unité d'affichage et à l'unité d'entrée d'utilisateur, dans lequel le contrôleur est configuré pour :
exécuter simultanément une pluralité d'applications, et
tout en affichant, sur l'unité d'affichage, des informations relatives à l'une de la pluralité d'applications exécutées simultanément :
sélectionner (S401) une première région parmi une ou plusieurs régions candidates prédéfinies de l'unité d'affichage en réponse à une première entrée appliquée à la première région par l'intermédiaire de l'écran tactile, le terminal mobile étant **caractérisé en ce que** le contrôleur est en outre configuré pour :
afficher (S402) une icône multitâche sur la région multitâche sélectionnée,
sélectionner (S403) l'icône multitâche en réponse à une seconde entrée ;
lors d'une telle sélection, afficher (S404) une liste d'au moins certaines des applications exécutées simultanément sur la première région sélectionnée,
augmenter (S405) une taille de la première région en réponse à une commande de glissement appliquée à la première région par l'intermédiaire de l'écran tactile, et
afficher (S406) des informations additionnelles sur une ou plusieurs de la pluralité d'applications exécutées simultanément sur la première région, dans lequel le niveau desdites informations additionnelles est déterminé sur la base de la taille modifiée de la première région.

2. Terminal mobile selon la revendication 1, dans lequel la liste inclut des icônes correspondant à une ou plusieurs des applications exécutées simultanément de la liste.

3. Terminal mobile selon l'une quelconque des revendications 1 ou 2, dans lequel les une ou plusieurs régions candidates sont fournies sur au moins l'un de multiples bords latéraux de l'unité d'affichage (511, 512, 521, 522).

4. Terminal mobile selon la revendication 3, dans lequel les une ou plusieurs régions candidates incluent au moins deux régions candidates sur différents bords latéraux de l'unité d'affichage.

5. Terminal mobile selon l'une quelconque des revendications 1 à 4, dans lequel la liste inclut une référence à au moins une application fonctionnant en arrière-plan.

6. Terminal mobile selon l'une quelconque des revendications 1 à 5, dans lequel le contrôleur est en outre configuré pour :
amener la première région à être distinguée des informations relatives à l'opération par un effet visuel prescrit, ou
afficher au moins un élément dans la liste conformément à l'effet visuel prescrit.

7. Terminal mobile selon l'une quelconque des revendications 1 à 6, dans lequel la première entrée inclut une sélectionnée dans le groupe comprenant :
une entrée de glissement ayant une trace préétablie entrée sur l'écran tactile ;
une commande tactile longue entrée sur l'écran tactile ;
une commande tactile répétée entrée successivement sur l'écran tactile dans un délai prescrit ; et
une multi-commande tactile entrée simultanément sur deux points sur l'écran tactile.

8. Terminal mobile selon l'une quelconque des revendications 1 à 7, dans lequel le contrôleur est en outre configuré pour :
afficher une icône d'affichage de liste sur la première région après que la première région a été sélectionnée, et
afficher la liste lorsque la première entrée est une entrée tactile sur l'icône d'affichage de liste.

9. Terminal mobile selon la revendication 8,
dans lequel les une ou plusieurs régions candidates prédéfinies incluent deux régions candidates prédéfinies ou plus, et
dans lequel le contrôleur est en outre configuré pour :
déterminer si la première région est en chevauchement avec une région exécutable des informations affichées actuellement, et
afficher automatiquement l'icône d'affichage de liste sur une autre des deux régions candidates prédéfinies ou plus si la première région est en chevauchement avec la région exécutable.

10. Terminal mobile selon la revendication 9, dans lequel l'une de l'icône d'affichage de liste et de la liste sur la première région n'est pas active si la première région est en chevauchement avec la région exécutable.

11. Terminal mobile selon la revendication 9, dans lequel l'une de l'icône d'affichage de liste et de la liste sur la première région est active même si la première région est en chevauchement avec la région exécutable.

12. Procédé de contrôle d'un terminal mobile incluant une unité d'affichage ayant un écran tactile, une unité d'entrée d'utilisateur, et un contrôleur relié de manière opérationnelle à l'unité d'affichage et à l'unité d'entrée d'utilisateur, le procédé comprenant :
l'exécution simultanée d'une pluralité d'applications ; et
tout en affichant, sur l'unité d'affichage, des informations relatives à l'une de la pluralité d'applications exécutées simultanément :
la sélection (S401) d'une première région parmi une ou plusieurs régions candidates prédéfinies de l'unité d'affichage lors de la réception d'une première entrée sur la première région par l'intermédiaire de l'écran tactile, le procédé étant **caractérisé en ce qu'**il comprend en outre :
l'affichage (S402) d'une icône multitâche sur la région multitâche sélectionnée,
la sélection (S403) de l'icône multitâche en réponse à une seconde entrée,
lors d'une telle sélection, l'affichage (S404) d'une liste d'au moins certaines des applications exécutées simultanément sur la première région sélectionnée, dans lequel la liste inclut des icônes correspondant à une ou plusieurs des applications exécutées simultanément de la liste,
l'augmentation (S405) d'une taille de la première région en réponse à une commande de glissement appliquée à la première région par l'intermédiaire de l'écran tactile, et l'affichage (S406) d'informations additionnelles sur une ou plusieurs de la pluralité d'applications exécutées simultanément sur la première région, dans lequel le niveau desdites informations additionnelles est déterminé sur la base de la taille modifiée de la première région.
